(19) Europäisches Patentamt

European Patent Office

Office européen des brevets

(11) **EP 1 003 006 A1**

(12) **EUROPEAN PATENT APPLICATION**

(43) Date of publication:
24.05.2000 Bulletin 2000/21

(51) Int. Cl.$^7$: **F28D 15/02**, F28D 20/02, H05K 7/20

(21) Application number: 98830692.4

(22) Date of filing: 19.11.1998

(84) Designated Contracting States:
**AT BE CH CY DE DK ES FI FR GB GR IE IT LI LU MC NL PT SE**
Designated Extension States:
**AL LT LV MK RO SI**

(71) Applicant: **Franz Isella S.p.A.**
**21020 Casciago (IT)**

(72) Inventor: **Sartori, Luigi**
**21026 Gavirate (IT)**

(74) Representative:
**Pellegri, Alberto et al**
**c/o Società Italiana Brevetti S.p.A.**
**Piazza Repubblica, 5**
**21100 Varese (IT)**

(54) **Hybrid system of passive cooling using heat pipes**

(57)    A passive cooling system for a thermally insulated enclosure (6,7) comprising one or more heat pipes (1) containing a fluid functionally undergoing phase changes, absorbing and dissipating accumulated heat, each heat pipe (1) having an evaporation portion of the working fluid inside the enclosure and a condensation portion of the working fluid projecting outside of the enclosure, characterized in that comprises a tank (3) housed inside the insulated enclosure, having a heat exchanging wall facing the internal space of the enclosure and containing a certain volume of water (4) and said evaporation portion of each heat pipe (1) being submerged in the water contained in said tank (3).

FIG. 2

Printed by Xerox (UK) Business Services
2.16.7 (HRS)/3.6

**Description**

FIELD OF THE INVENTION

The present invention relates in general to heat exchange techniques and more in particular to a passive cooling system of a high thermal ballast employing heat pipes.

BACKGROUND OF THE INVENTION

Telecommunication, computing and data collection devices to be installed in remote areas must be housed in special shelters or enclosures for protecting them from dust, sand, exhalations, fumes, rain, etc.).

Where a complete insulation of the enclosed space from the external environment is mandatory and normal "open" systems like a forced ventilation for controlling the temperature within the enclosure and dissipating the heat generated by the electric and electronic apparatuses are no longer usable, it becomes necessary to resort to heat exchangers.

However, often in remote areas without utility networks, electric power is not available or too costly to provide, and the electric energy needed for the functioning of the apparatuses is obtained from solar panels and then stored in accumulators. In these conditions, the exchange of heat cannot be assisted by fans or by conventional cooling systems because of the prohibitively high power consumption of such devices.

In these situations, passive cooling techniques are implemented to prevent excessive temperatures within the enclosure.

Many systems are known and described in the literature for controlling the temperature rise inside the enclosure that defines a space substantially scaled and thermally isolated from the external environment by the walls of the cabinet, wherein, the heat generated within the enclosure by electronic and electrical devices is transferred to the external by a passive cooling system consisting of a battery or array of heat pipes.

Heat pipes have been used traditionally for this purpose. A heat pipe essentially defines a conduit into which a fluid may circulate, most typically in a closed loop. The fluid is normally a material undergoing a change of state, for example, liquid-to-vapor change of state during a phase of heat absorption and accumulation, and a vapor-to-liquid change of stage when accumulated heat is released to the external environment.

Heat pipes offer a high heat exchange yield because a relatively small temperature difference is sufficient to procure an effective heat exchange and have a relatively small adductance.

Indeed, in a completely passive cooling system, the air velocity, depending on the external weather conditions and on convective motions inside the enclosure, is more or less negligible with evident limiting effects on the heat exchanges among the different fluids.

By contrast, heat pipes (two-phase circuits with a thermosiphon like functioning) allow for an adequate heat transfer from their evaporation portion fitted inside the enclosure to their condensation portion projecting outside the insulating walls of the cabinet, even at the typical conditions of operation of a passive (unassisted) system.

The evaporator portion of the heat pipe is housed in the enclosure whereas the condenser portion projects outside the enclosure. The external condenser portion may be provided with fins to enhance heat dissipation in the atmosphere.

Normally, one or more heat pipes or a battery of heat pipes is installed through the insulating walls of the enclosure for absorbing the heat generated by the devices stored inside the sealed cabinet and eventually dissipating it in the external environment, to prevent the reaching of temperatures exceeding certain limits within the enclosure, taking into account the prevailing climatic conditions in the location where the apparatuses must be installed.

The document EP-A-0 777 095-A2 describes a passive cooling system of an enclosure by means of heat pipes, wherein, the heat pipe is indeed a composite structure made by coupling together two distinct heat pipes, also referred to as thermal diodes, functionally in a series arrangement. In practice, the conventional condenser portion of a first heat pipe employing a working fluid subject to liquid-to-vapor and vapor-to-liquid phase changes, is conventionally installed outside the cabinet wall, while the evaporator portion, inside the enclosure, houses the solidifying portion of a second heat pipe employing a material undergoing solid-to-liquid and liquid-to-solid phase changes, whose melting portion acts as a primary heat absorber within the enclosure.

The use of two distinct heat pipes (heat diodes) in series provide for an adequate heat absorption capacity even during periods of time when, due to a persistently high external temperature, the working fluid of the first heat pipe is unable to condense within the external portion of the first heat pipe.

This system implies a more complex construction and introduces restraints in the design and in the physical organization of parts, overall increasing the occupation of space within the sealed cabinet, in order to promote the heat exchange between the solidifying portion of the second heat pipe and the fluid of the first heat pipe.

# EP 1 003 006 A1

## OBJECT AND SUMMARY OF THE INVENTION

The objective of the present invention is to provide a passive cooling system for a sealed and insulated enclosure housing heat sources, based on the use of heat pipes, capable of limiting the temperature excursion within the enclosure even when daily environmental condition are such to prevent for a certain time, a sufficient dispersion of heat in the atmosphere because of an external air temperature equal or higher than the temperature within the enclosure.

It has now been found that by installing within the insulated cabinet walls a tank containing an adequate volume of water and having at least a wall designed to provide for an effective heat exchange between the interior environment including the heat sources and the volume of water contained inside the tank, and by arranging for the evaporation portion of the heat pipes to be submerged in the water contained in the tank, an outstandingly effective limitation of the daily thermal excursion inside the enclosure is achieved.

Moreover, the passive cooling system may be structured in a more space efficient manner than traditional heat pipe systems.

Indeed, if on one hand the volume of water may be designed to provide for an adequate heat storage capacity in respect of limit environmental conditions established by knowing the climatic condition prevailing in the location of installation, the fact that the evaporation portion of the heat pipes is submerged in the water and thereby benefiting of the natural convective motions that are induced in the water and that favor the exchange of heat, permits also to conform the heat absorbing portions of the heat pipes in a way such to occupy less space within the enclosure.

The heat exchange between the ambient within the enclosure and the mass of water may be easily maximized by making the tank in the form of a wall of the enclosure, thus maximizing the area of radiative heat captation of the innermost metal wall, which may even be furnished with fins to enhance increase heat absorption by conduction, exploiting the convective motions of the air within the enclosure.

Of course, the material of the innermost heat exchanging wall of the perimetral tank space as well as its surface finish are chosen to favor radiative heat absorption and heat conduction from the inner space of the cabinet to the water contained inside the wall tank. Preferred materials are copper and aluminum treated to enhance heat absorption via radiation.

The heat absorption from the internal space by the water contained inside the perimetral wall tank may also be assisted, according to an alternative embodiment of invention, by using a second series of heat pipes of the same type as the heat pipes used to transfer to the outside the heat accumulated in the water, functionally installed through the inner wall of the water tank which separates the water from the interior space of the enclosure.

## BRIEF DESCRIPTION OF THE DRAWINGS

The various aspects and advantages of the invention will become even clearer through the following description of several embodiments and by referring to the attached drawings, in which:

**Figure 1** illustrates an embodiment of the system of the invention;
**Figure 2** illustrates the architecture of the heat pipe passive cooling device used in the embodiment of Fig. 1;
**Figure 3** shows an alternative embodiment;
**Figure 4** illustrates another embodiment of the invention, employing a two stage heat pipe system;
**Figure 5** is the diagram used for analyzing the behavior of a system of the invention;
**Figures 6, 7, 8** and **9** illustrate certain operating characteristics of the model of Fig. 5;
**Figure 10** shows the behavior of a system of the invention employing a volume of water for heat accumulation;
**Figure 11** shows, for comparison purposes, the behavior of a conventional system using heat pipes;
**Figure 12** shows two diagrams relative to a diurnal cycle for a passive system of the present invention and for a known passive system using two heat pipe devices in series;
**Figure 13** shows the simulated comparison of the two systems for an annual cycle;
**Figures 14** and **15** provide for a comparison of the behavior of a system of the invention with that of a known system using a double heat diode, for a normal daily cycle and for a simulated anomalous daily cycle.

## DESCRIPTION OF SEVERAL EMBODIMENTS OF THE INVENTION

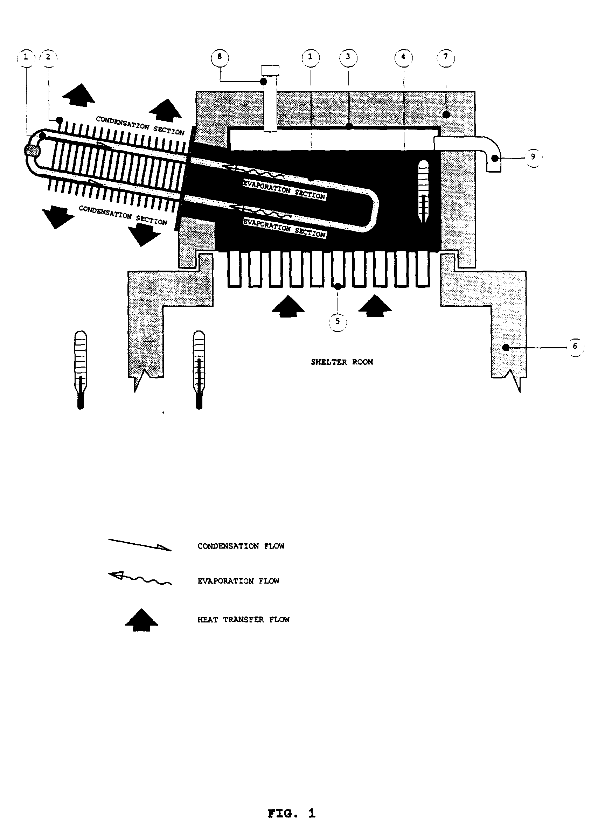

Figure 1 shows a partial section of the upper portion of a cabinet, indicated as a whole with 1, whose walls 6 and 7, have a composite structure and includes layers of materials capable to ensure a high level of thermal insulation between the interior space of the cabinet and the external environment.

The passive heat pipe cooling system of the present invention comprises a heat device or a battery of heat pipes 1, defining a circuit containing a fluid undergoing phase changes, liquid-to-vapor and vice versa within the range

3

of thermal excursions to which the interior of the enclosure may undergo. Commonly, the working fluid is chosen among ammonia, HCFC-123; HCFC-124; HCFC-134a, and the like.

The outer portion of the heat pipes battery may conveniently be equipped with fins 2 to favor the heat exchange with the outside environment.

According to an essential aspect of the invention, the evaporation portion of the battery of heat pipes is submerged in a body of water 4 contained within a tank 3, which in the example shown in the figure, is installed in the underside of the top wall of the cabinet. Water is loaded inside the tank 3 through the inlet 8 while a level outlet 9 facilitates the filling of the tank 3 and a periodical replenishment.

The lower wall of the tank 3 faces the air space of the internal cavity of the enclosure and as shown, may be provided with fins 5 to increment the heat exchange between the air within the enclosure and the water 4 contained inside the tank 3, through the finned metal wall of the tank, which as any other internal part thermally isolated from the external environment by the thermally insulating top wall 7 of the cabinet. The tank 3 or at least the heat exchanging wall is of a highly conductive metal such as copper or aluminum, preferably of the darkened melt finished to reduce reflectivity and increase the heat absorption capacity. Fins may also be provided on the water side of the wall.

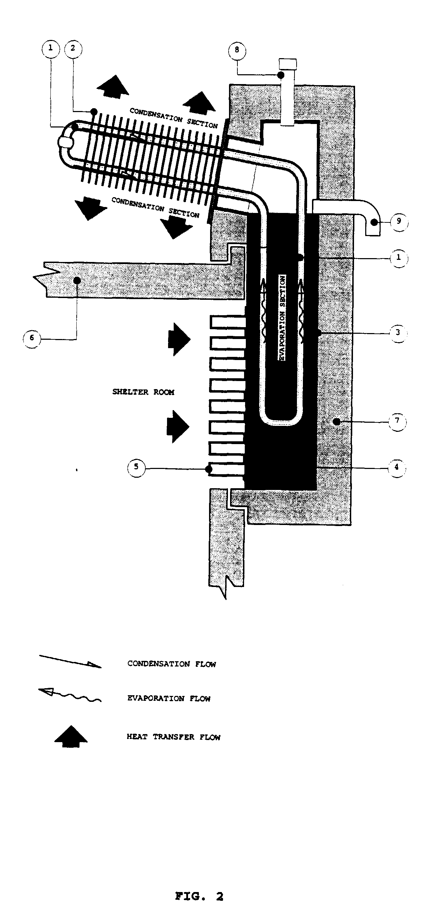

An alternative arrangement of the passive cooling system of the invention is illustrated in Fig. 2, in which the same numbers are used to indicate the same parts that make up the device.

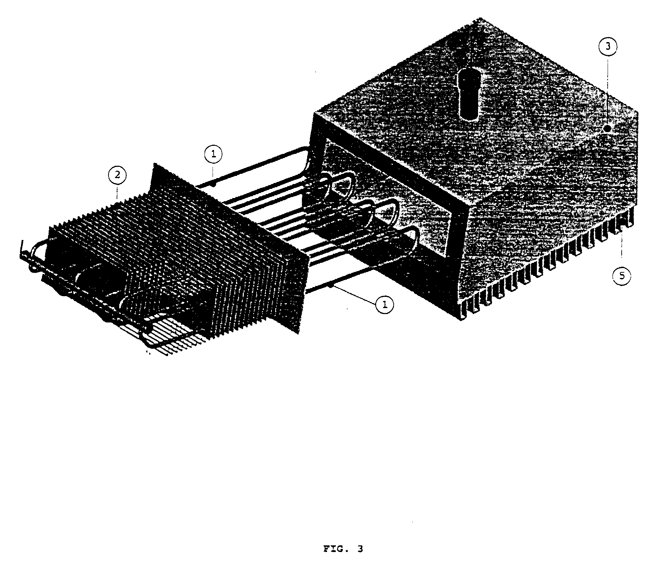

Fig. 3 is a partial vertical cross section showing another alternative arrangement of the passive cooling system within the enclosure, wherein the same functional parts are indicated with the same numbers used in the preceding figures.

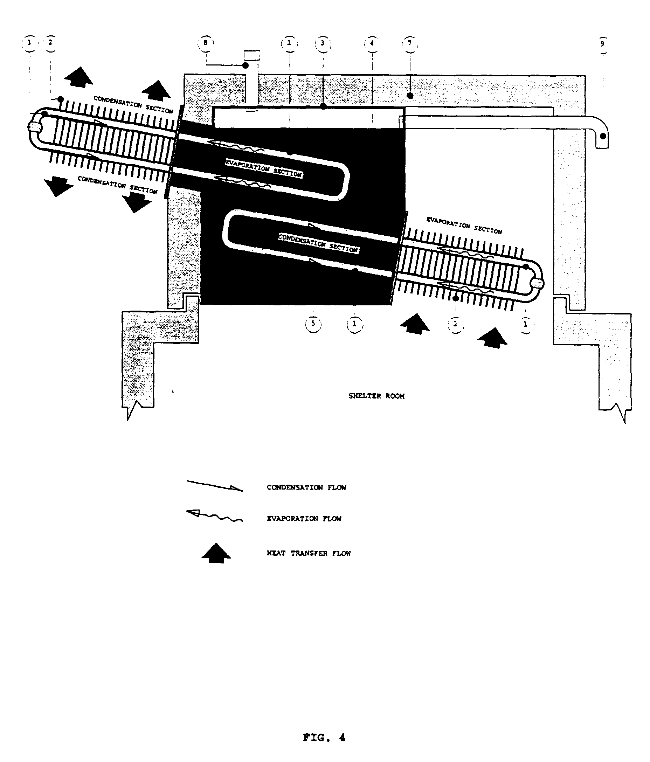

Fig. 4 illustrates another embodiment of the passive cooling system of the invention in which the heat exchange between the air inside the enclosure and the water 4 contained inside the tank 3 is assisted by a second battery of heat pipes 1' and 2', substantially identical to the first battery of heat pipes 1 and 2.

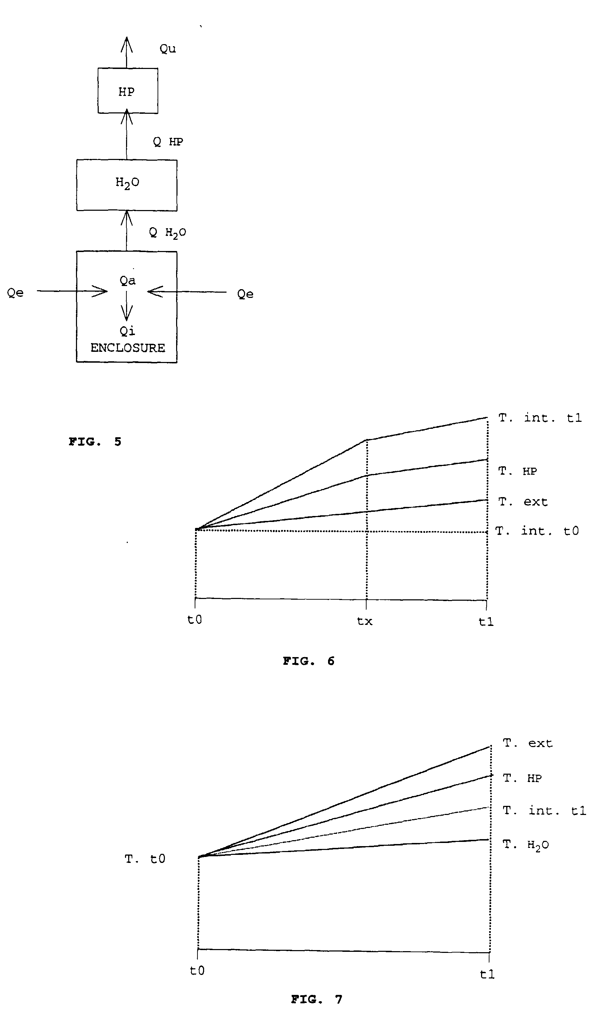

The scheme of figure 5 illustrates the functioning and the way a passive system of the invention capable of ensuring in a close ambient (such as for example a sealed and insulated enclosure housing electronic apparatuses) a maximum diurnal temperature lower than the corresponding outside temperature even in presence of a certain internal heat load (heat generated by the housed electronic devices) may be dimensioned.

The parameters and the variables of the model considered and indicated in Fig. 5 have the following meanings:

HP = battery of heat pipes for transferring the heat to the external environment
$H_2O$ = water tank
Qe = heat coming from the outside through the insulating walls of the enclosure (J)
Qa = heat generated by the devices housed in the enclosure
Qi = residual heat within the enclosure
$QH_2O$ = heat absorbed by the water (J)
QHP = heat absorbed by the HP battery
Qu = heat dissipated to the outside environment

The heat balance depends upon constant coefficients (heat transmissivity) and on variable parameters (temperature difference).

In any case, by observing the model of Fig. 5, it may be remarked that without a mass of water acting as a heat ballast, the passive system could never work in a condition of an outside temperature greater than the temperature inside (Test>Tint) because in order to have a transfer of heat to the outside ambient through the battery of heat pipes HP the fluid temperature must be higher than the external temperature and lower than Tint in order to absorb the heat.

In any passive heat exchange system based on heat pipes, the limit condition is Test<Tint for the mechanism of heat transfer to become operative.

The role of the water will be understood by considering the system's dynamic behavior during a 24 hour cycle, that is a complete day long cycle.

Considering the constants and variables that govern the exchange of heat, it may be recognized that the determining factor (which influences others) is the outside temperature. The latter, by oscillating from a minimum nocturnal temperature to a maximum diurnal temperature determines similar variations, through phase shifted, of other temperatures, namely : Tint, $TH_2O$ and THP.

In a generic passive system the following condition is verified:

$$Text\_min < Tint\_max < Text\_max.$$

By referring to the diagram of Fig. 5 and to the physical parameters that play a role, the behavior of the passive cooling system in the two situations: Text_min (night) and Text_max (day) may be so analyzed:

*DAY TIME*

During the day heat dissipation toward the external environment stops when Tint<Test even though the fluid temperature in the heat pipe HP may be less that Test, because of the coefficient K that must be greater than zero, thus:

$$THP < TH_2 0 < Tint < Test$$

For as long as Text≥Tint, the temperature inside the enclosure, rises because the heat cannot be transferred to the outside. During this period, Tint rises toward Test and is contrasted only by the thermal ballast which, by absorbing the heat generated inside the cabinet and that reaching the interior by conduction through walls of the cabinet contrast the rise of Tint temperature keeping it from tracking close of Test.

The mass of the enclosure has a negligible thermal ballast. By contrast, a considerable amount of water is potentially capable to absorb a remarkable amount of heat, as expressed by the following equation:

$$Qa + Qc - QH_2 0 = Qi \qquad [1]$$

In equation [1] Qi is responsible for the rise of the internal temperature, therefore the greater is the heat absorbed by the water ($QH_2 0$) the less is the increment of internal temperature.

By referring to Figures 6 and 7, the difference between two comparable systems, may be better appreciated.

Fig. 6 shows the heat waves that occur in a known system, without any substantial thermal ballast and conventionally equipped with heat pipes for releasing heat to the outside. The thermal condition at the time t0 corresponds to a minimum of Test with Qa = 0. Therefore Qc = 0, and also Qi = 0. The starting condition is then assumed to be Text =Tint.

During the time interval t0-tx, by assuming Qa = 1, Tint tends to rise more rapidly than Text, directly proportional to Qa and inversely proportional to Qc.

At the instant tx the difference of temperature is such that Tint>THP>Test, thus starting to produce a transfer of heat to the outside through the battery of heat pipes.

During the time interval tx-t2 the thermal condition remains constant:

$$Qa - Qc = QHP \qquad [2]$$

Therefore:

$$Tint > Text; \ Tint - Text = Constant \qquad [3]$$

Such a condition remains unaltered even at t1 (maximum Text) and as explained later for the whole night-time period.

By contrast Fig. 7 shows the behavior of the system of the invention based on the use of a water ballast inside the enclosure.

The starting thermal condition is identical to the preceding case of a known system.

During the internal t0-t1, by assuming Qa = 1, Tint tends to rise less rapidly than Text, according to equation [1] and directly proportional to Qa+Qc and inversely proportional to $QH_2 0$.

Up to the time t1 (maximum Text) the following situation will be verified:

$$Tint\_max < Text\_max \qquad [4]$$

*NIGHT-TIME PERIOD*

At night-time the outside temperature decreases determining conditions suitable to promote a heat transfer through the battery of heat pipes.

Fig. 8 shows to the heat waves in a known system: during the time period to t1, there is the same condition defined in equation [3].

If no other factors intervene, such a condition remains constant. By decreasing Text, Tint will follow it and therefore:

$$Tint\_min > Text\_min$$

thus:

$$Tint\_max - Text\_max = Tint\_min - Text\_min = Constant \qquad [5]$$

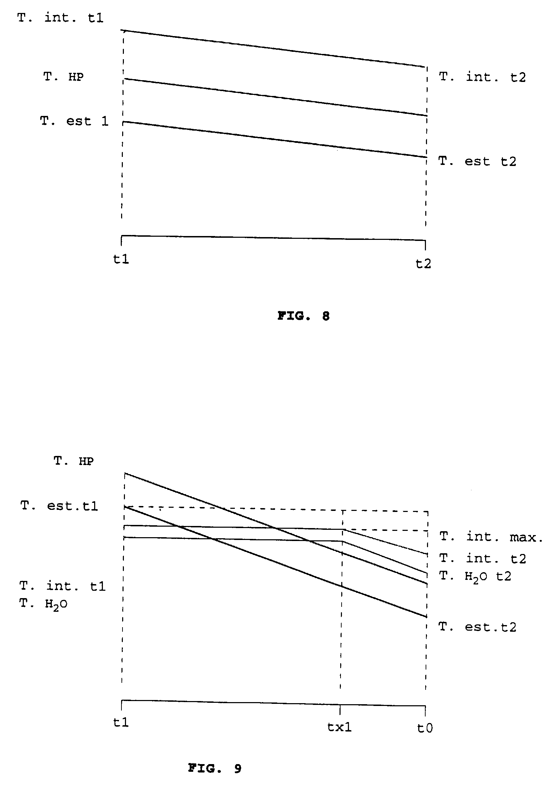

Fig. 9 shows the temperature waves in a system of the invention.

During the interval t1-tx1, a temporary period of stabilization of Tint is experienced. By diminishing Qc due to the difference of temperature between Tint and Text, diminishes also $QH_2O$ according to equation [1]. The thermal ballast (water), by gradually receiving less and less heat stabilizes at $TH_2O$ max determining the same stabilization of temperature inside the enclosure (Tint_max).

At the instant tx1 the temperature difference reaches the point such that $Tint>TH_2O>THP>Test$ thus permitting the transfer of heat to the outside through the heat pipes.

During the interval tx-t2, the thermal conditions remains constant. The heat subtracted to the water causes a rapid cooling of the water and as a consequence Tint also decreases, proportionally to the decline of Text.

By assuming constant cycles, each of 24 hours, wherein the same minimum and maximum temperatures repeat themselves in intervals of 12 hours, the system of the invention may be considered stable when:

$$QH_2O \times (t1-t0) = Qe \times (t2-tx1) \qquad [6]$$

The diagrams of figures 6, 7, 8 and 9 refer to a simplified model because in reality the thermal ballast of the systems and the variables involved can hardly determine rectilinear characteristics.

In correctly designing the system, multiple variables influenced by different temperatures and which determine different heat balances, must be taken into consideration. By way of a simplified example, reference may be made to the diagram of Fig. 5.

- Qa = constant (known exactly);
- Qe = variable (depends on the K1 constant which may be easily determined, but also on Text-Tint);
- Tint is directly proportional to Qi; the latter being the residual heat of $Qa+Qe-QH_2O$;
- $QH_2O = K2 \times Tint - TH_2O$ ; K2 is constant and may be analytically or experimentally defined while the temperature variation of the water depends on the heat input, on its thermal capacity (day-time) and on the cooling ability of the battery of heat pipes during night-time.

A computer model applied to an entire 24 hour cycle permitted an analysis of the thermal behavior by intervals of 10 minutes, demonstrating a good approximation with measurements taken during actual test runs.

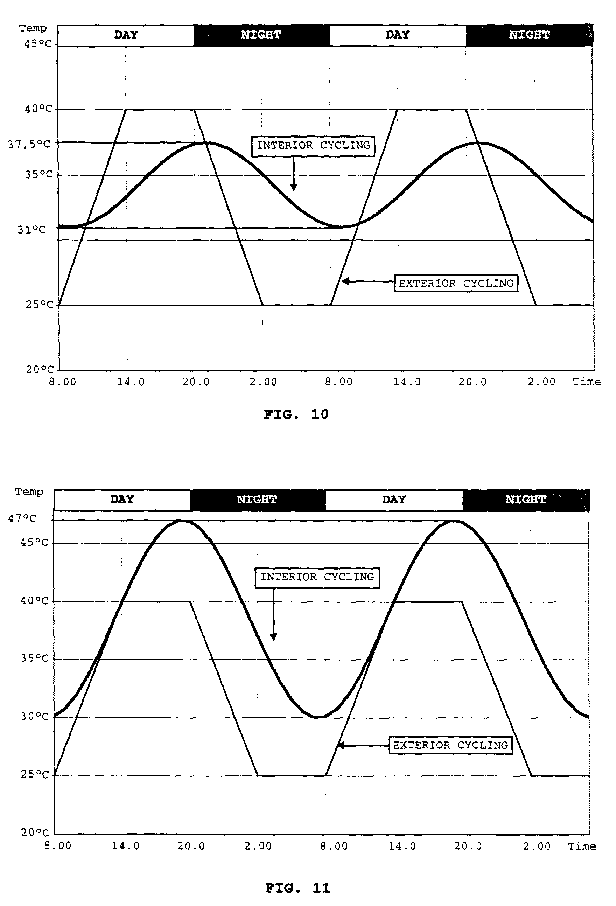

Figures 10 and 11 show the simulated diagrams, respectively for a known system without a water ballast (Fig. 11) and for a system of the invention using a water ballast (Fig. 10).

The design data were the same:

| | |
|---|---|
| Size of the enclosure | 2.5 x 2.5 x 2.5 m |
| Thermal inertia | 1000 KJ/°C |
| Global heat transmissivity of enclosure | 23.1 W(J/s)°C |
| Internal heat generation | 300 W(J/s) |
| Daily thermal cycle profile | - 6 hours constant at +25°C |
| | - 6 hour ramp with a constant slope up to +40°C |
| | - 6 hours constant at +40°C |
| | - 6 hours, constant slope cooling down to +25°C |

Both systems employed two batteries of finned heat pipes for a total internal exchange area of $1m^2$ and equivalent external exchange area.

The system of the invention included a water ballast of 500 liters (for a thermal ballast of 2095 KJ/°C).

As may be readily observed by comparing the diagrams of Figures 10 and 11, for the above mentioned testing conditions, the temperature excursion inside the cabinet of the known system (Fig. 11) in the 24 hour cycle was about 17°C, with a maximum temperature of 47°C and a minimum temperature of 30°C; while in the case of the system of the invention including a heat ballast of 500l of water (Fig. 10), the heat excursion was reduced to about 7°C with a maximum temperature of 37.5°C and a minimum temperature of 31°C.

Even compared to the passive cooling system described in the European Patent EP-A-0 777 095-A2, where a thermal ballast in the form of a fusible material (for example hydrated salt) contained in a second auxiliary battery of heat pipes, thermally coupled in series with the primary battery, the use of a thermal ballast of water and a single heat pipe battery, according to the present invention, besides having the above noted important architectural and dimensional advantages, provides for an outstandingly efficient system showing advantages also in terms of enhanced flexibility and safety.

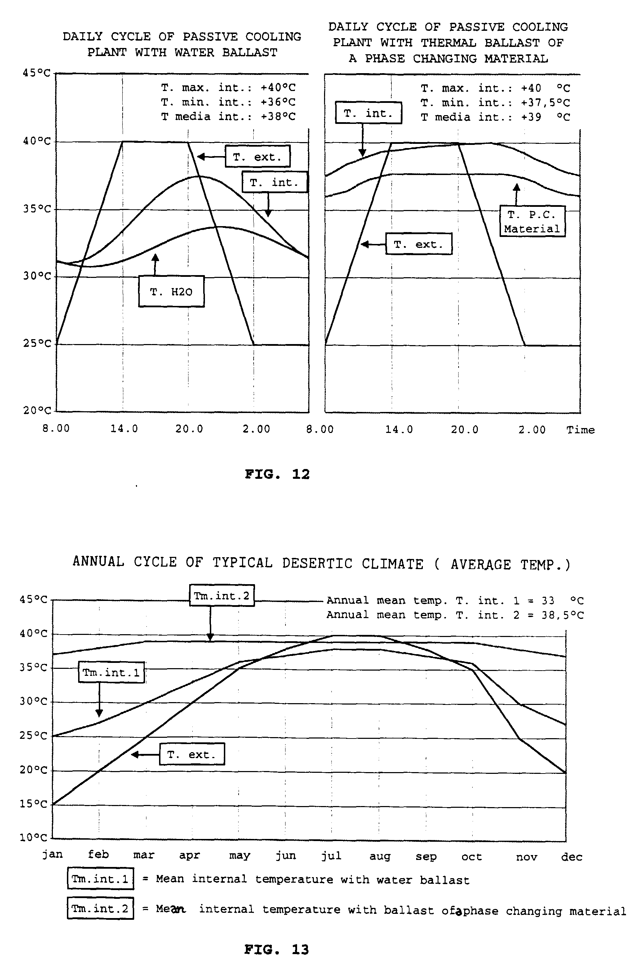

The two diagrams of Fig. 12 represent the behaviors, for the same thermal conditions, that is for an identical external thermal cycle determining the same maximum internal temperature, of a such system according to the present invention and a system realized according to the teachings contained in the document EP-A-0 777 795-A2.

The sinusoidal shape of the temperature waves, that is of the temperatures inside the enclosure of the system of the invention, shows how the system of the invention is able to attain lower daily average temperatures. This outstanding result is due to the thermal ballast of water that remains constant during the whole 24 hour cycle. By contrast, in a system that uses a thermal ballast due to the phase change of a fusible material, the internal temperatures rise quickly until the fusible material reaches the melting point and thereafter remains constant for the time taken to melt the whole mass. Prior to the melting and after solidification the thermal ballast is again practically negligible.

Notably, hydrated salts would be used as fusible material and these salts present problems of either incongruent fusion (at the established temperature the solid does not melt completely) or of overfusion (formation of eutectics that solidify at different temperatures). Indeed, a material that minimizes the likelihood of these phenomena is a mixture of $Ca(NO_3)_2 \cdot 4H_2O + Mg(NO_3)_2 \cdot 6H_2O$, having a melting point between 30-34°C and a thermal capacity of 136 KJ/Kg during melting.

In conducting comparative tests, 15 Kg of such a material have been used for a thermal ballast equal to 2095 KJ, that is, equal to that of the volume of water employed in the system of the invention, by introducing such a load of hydrated salts inside a second heat pipe battery, functionally in series to the primary battery, the latter being identical in both systems.

The unsuspectable superiority of a water thermal ballast compared to a thermal double diode of the known system becomes even more evident when comparing the behavior of the two systems for an annual cycle, as depicted in Fig. 13. During less demanding daily cycles, the inside temperature of the enclosure for the case of a thermal double diode system of the prior art must inevitably reach the minimum temperature necessary to trigger the fusion process, in practice determining a situation wherein the devices housed within the enclosure work for long periods at temperatures close to the limit temperature, with evident negative effects on their ageing.

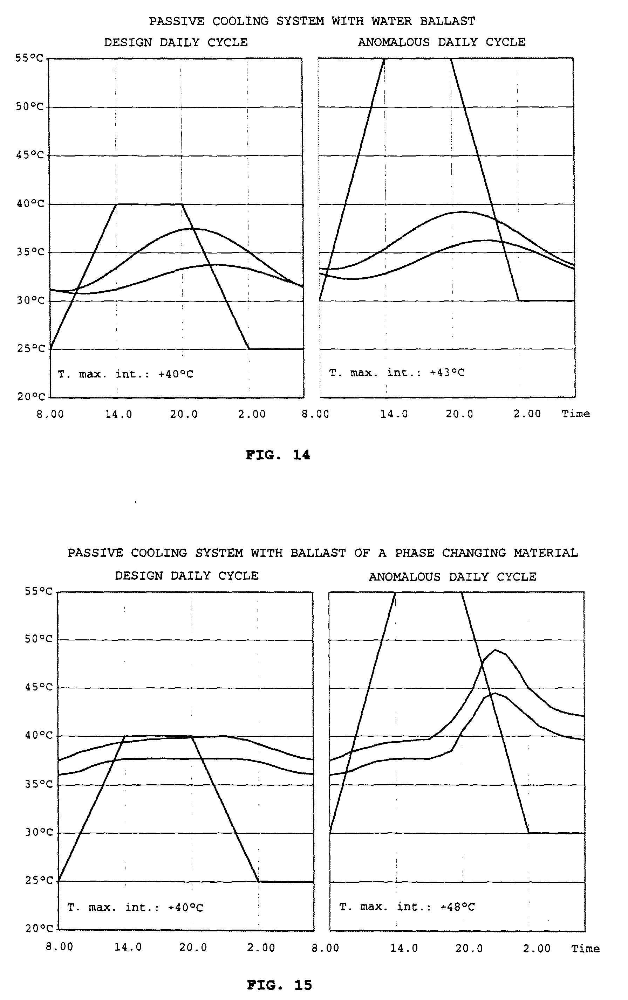

A further advantage of the system of the invention as compared to the known system based on the use of a double thermal diode is evidenced on the occasion of anomalously demanding daily cycles which may not be considered during the design stage (for example during an exceptionally hot day with extreme temperature peaks). The passive cooling system of the invention using water ballast stabilizes with only a small increment of the temperature as highlighted in Fig. 14.

By contrast, in a system using a secondary heat pipe loaded with hydrated salts, the excessive increment of the salt temperature, considerably higher than its melting point favor the formation of eutectic which in turn progressively rises the melting point giving origin to an uncontrolled increase of the internal temperature. In the test conducted, temperatures over 40°C caused the salt mixture to undergo a crystalline change that increased the melting temperature and consequently problems of incongruent fusion with the end result of incrementing the temperature inside the enclosure, as shown in Fig. 15.

**Claims**

1. A passive cooling system for a thermally insulated enclosure comprising one or more heat pipes containing a fluid functionally undergoing phase changes, absorbing and dissipating accumulated heat, each heat pipe having an evaporation portion of the working fluid inside the enclosure and a condensation portion of the working fluid projecting outside of the enclosure, characterized in that comprises

   a tank housed inside the insulated enclosure, having a heat exchanging wall facing the internal space of the enclosure and containing a certain volume of water;
   said evaporation portion of each heat pipe being submerged in the water contained in said tank.

2. The passive cooling system according to claim 1, characterized in that said tank extend along the innermost face of at least an insulating wall of said enclosure and said heat exchange wall of the tank is shaped and provided with a surface finishing such to maximize the heat exchange from the internal space of the enclosure housing heat sources and to the water contained in said tank.

3. The passive cooling system according to claim 2, characterized in that said evaporation portion of each heat pipe is submerged in the uppermost portion of the volume of water contained in said tank.

4. The passive cooling system according to any of the preceding claims, wherein said heat pipes are substantially inclined, the condensation portion outside the enclosure being at a higher level than the condensation portion submerged in the water contained in said tank.

FIG. 1

CONDENSATION SECTION

CONDENSATION SECTION

EVAPORATION SECTION

SHELTER ROOM

CONDENSATION FLOW

EVAPORATION FLOW

HEAT TRANSFER FLOW

FIG. 2

FIG. 3

CONDENSATION SECTION

EVAPORATION SECTION

CONDENSATION SECTION

EVAPORATION SECTION

CONDENSATION SECTION

SHELTER ROOM

CONDENSATION FLOW

EVAPORATION FLOW

HEAT TRANSFER FLOW

FIG. 4

**FIG. 5**

Qu

HP

Q HP

$H_2O$

Q $H_2O$

Qe → Qa ← Qe

Qi

ENCLOSURE

T. int. t1

T. HP

T. ext

T. int. t0

t0          tx          t1

**FIG. 6**

T. ext

T. HP

T. int. t1

T. $H_2O$

T. t0

t0                      t1

**FIG. 7**

**FIG. 8**

**FIG. 9**

FIG. 10

FIG. 11

DAILY CYCLE OF PASSIVE COOLING
PLANT WITH WATER BALLAST

DAILY CYCLE OF PASSIVE COOLING
PLANT WITH THERMAL BALLAST OF
A PHASE CHANGING MATERIAL

T. max. int.: +40°C
T. min. int.: +36°C
T media int.: +38°C

T. ext.

T. int.

T. H2O

45°C
40°C
35°C
30°C
25°C
20°C

8.00    14.0    20.0    2.00

T. int.

T. max. int.: +40  °C
T. min. int.: +37,5°C
T media int.: +39  °C

T. P.C.
Material

T. ext.

8.00    14.0    20.0    2.00    Time

**FIG. 12**

ANNUAL CYCLE OF TYPICAL DESERTIC CLIMATE ( AVERAGE TEMP.)

45°C
40°C
35°C
30°C
25°C
20°C
15°C
10°C

Tm.int.2

Tm.int.1

T. ext.

Annual mean temp. T. int. 1 = 33  °C
Annual mean temp. T. int. 2 = 38,5°C

jan   feb   mar   apr   may   jun   jul   aug   sep   oct   nov   dec

Tm.int.1 = Mean internal temperature with water ballast

Tm.int.2 = Mean internal temperature with ballast of phase changing material

**FIG. 13**

PASSIVE COOLING SYSTEM WITH WATER BALLAST

DESIGN DAILY CYCLE          ANOMALOUS DAILY CYCLE

T. max. int.: +40°C

T. max. int.: +43°C

8.00    14.0    20.0    2.00    8.00    14.0    20.0    2.00    Time

**FIG. 14**

PASSIVE COOLING SYSTEM WITH BALLAST OF A PHASE CHANGING MATERIAL

DESIGN DAILY CYCLE          ANOMALOUS DAILY CYCLE

T. max. int.: +40°C

T. max. int.: +48°C

8.00    14.0    20.0    2.00    8.00    14.0    20.0    2.00    Time

**FIG. 15**

16

**European Patent Office**

**EUROPEAN SEARCH REPORT**

Application Number

EP 98 83 0692

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 2 499 736 A (KLEEN) 7 March 1950 <br> * column 2, line 40 – column 3, line 66; figure 1 * | 1,2,4 | F28D15/02 <br> F28D20/02 <br> H05K7/20 |
| X | FR 2 446 455 A (DAIKIN KOGYO CO LTD & NIPPON ELECTRIC CO LTD) 8 August 1980 <br> * page 15, line 19 – page 15, line 40; figure 8 * | 1,2,4 | |
| X | WO 93 17292 A (COMMONWEALTH SCIENTIFIC AND INDUSTRIAL RESEARCH ORGANISATION) 2 September 1993 <br> * page 4, line 27 – page 7, line 3; figures 1,2 * | 1-3 | |
| A | US 4 907 644 A (GHIRALDI) 13 March 1990 <br> * column 2, line 26 – column 3, line 66; figures 1-3 * | 1,2,4 | |

|  |
|---|
| TECHNICAL FIELDS SEARCHED (Int.Cl.6) |
| F28D <br> H05K |

The present search report has been drawn up for all claims

| Place of search | Date of completion of the search | Examiner |
|---|---|---|
| THE HAGUE | 20 April 1999 | Beltzung, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 003 006 A1

**ANNEX TO THE EUROPEAN SEARCH REPORT
ON EUROPEAN PATENT APPLICATION NO.**

EP 98 83 0692

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-1999

| Patent document cited in search report | | Publication date | Patent family member(s) | | Publication date |
|---|---|---|---|---|---|
| US 2499736 | A | 07-03-1950 | NONE | | |
| FR 2446455 | A | 08-08-1980 | NONE | | |
| WO 9317292 | A | 02-09-1993 | AU | 3487293 A | 13-09-1993 |
| | | | ZA | 9301192 A | 15-10-1993 |
| US 4907644 | A | 13-03-1990 | JP | 1270939 A | 30-10-1989 |

EPO FORM P0459

For more details about this annex : see Official Journal of the European Patent Office, No. 12/82

18